# EUROPEAN PATENT APPLICATION

(11) **EP 3 683 961 A1**
(43) Date of publication of application: **22.07.2020**
(21) Application number: 19305075.4
(22) Date of filing: 21.01.2019
(51) Int. Cl.: H02S 40/42, F24F 5/00, G05D 23/00

(54) **THERMAL MANAGEMENT OF PV PANELS**

(71) Applicant: Total SA, 92400 Courbevoie (FR)
(72) Inventor: AYME-PERROT, David, 68330 HUNINGUE (FR); JAFFER, Shaffiq, Sudbury, MA 10076 (US)
(74) Representative: Lavoix

(57) **Abstract**

The present invention relates to a system (1) limiting temperature variation of one or more photovoltaic (PV) modules (10), each module comprising one or more PV cells (15), said system (1) comprising at least one means (30) for circulating a heat exchange fluid (25) comprising a PCM (phase change material) into one or more circulating means (20), wherein a, preferably each, circulating means (20) comprises a first zone (40) in close proximity with a PV module (10) to transfer heat between the PV cells (15) and said fluid (25), wherein said circulating means comprises a second zone (50) buried in the ground (60) thereby transferring heat between the fluid and the ground, and said means (20) being arranged to allow said fluid (25) to circulate from said first zone (40) to said second zone (50) and from the second zone (50) to the first zone (40).

The present invention relates to a method or process for the thermal management of a system (1) converting solar radiation into electricity.

## Description

The present invention concerns a system limiting temperature variation of photovoltaic (PV) modules and the management of heat (Thermal management) thereof.

The present invention concerns also a method or process for the thermal management (or thermo-management) of a system converting solar radiation into electricity.

### Prior art

The heat generated in cells during illumination is an obstacle to the efficiency optimization of the light conversion. It is understood that increasing temperature of the PV cells by 1 °C would lead to 0.5% reduction in solar electrical efficiency for the crystalline silicon cells and around 0.25% for the amorphous silicon cells.

In hot regions, the PV panels can reach up to 80 - 90°C during operation, therefore very high losses of energy yield occur.

In this context, limiting the temperature of the PV cells, to increase the system's solar efficiency by removing the accumulated heat from the rear of the PV modules appears a relevant approach, known as the PV/Thermal (PV/T) technology.

Moreover, in areas where the temperature can cycle over the year to cold extremes, other types of issues can pop up and decrease the efficiency of PV panels : presence of snow on the panels, ageing and reliability issues of encapsulates. This requires some labor for ensuring the technical maintenance.

### Goals of the invention

The present invention aims to solve the technical problem of limiting losses of energy yield in PV cells.

The present invention aims to solve the technical problem of limiting temperature variation in PV cells.

It is well known in the art that it is not easy to simplify industrial systems and save costs.

Accordingly, the present invention aims to solve the technical problems of limiting losses of energy yield in PV cells, notably by limiting temperature variation in PV cells, while saving costs for functioning such PV cells.

### Detailed description of the invention

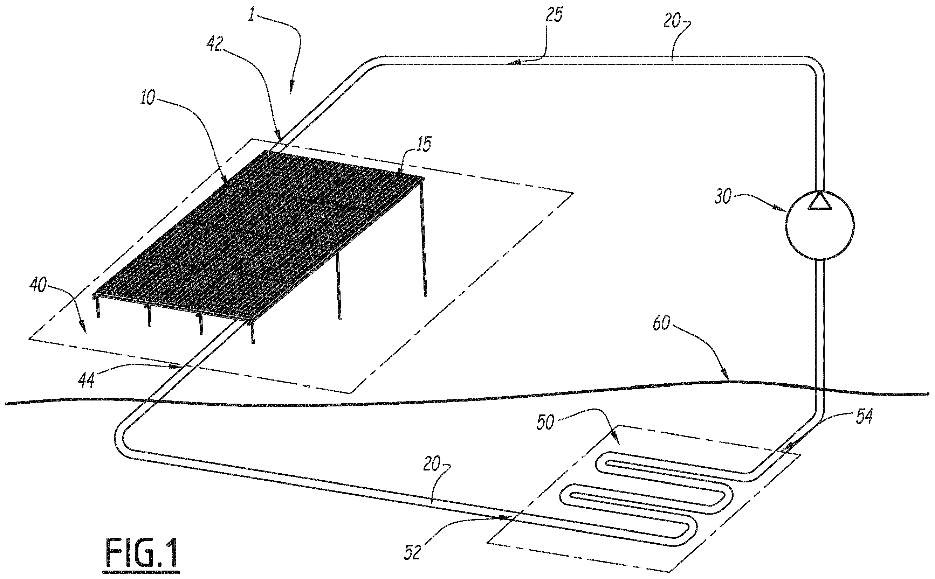

The foregoing and other objectives, features, and advantages of the invention will be more readily understood upon consideration of the following detailed description of the invention taken in conjunction with the accompanying drawing.

For a more complete understanding of the present invention, the drawing illustrates an example of the invention. The drawing thereto, however, does not limit the scope of the invention. In the following detailed description, numerous specific details are set forth in order to provide a thorough understanding of the present invention. However, those skilled in the art will understand that the present invention may be practiced without these specific details, that the present invention is not limited to the depicted embodiments, and that the present invention may be practiced in a variety of alternate embodiments. In other instances, well known methods, procedures, components, and systems have not been described in detail. Also, the present invention covers any combination of different embodiments, preferred and/or advantageous features.

The present invention relates to a system limiting temperature variation of photovoltaic (PV) modules 10, each module comprising one or more PV cells 15, said system 1 comprising at least one means 30 for circulating a heat exchange fluid 25 comprising a PCM (phase change material) into one or more circulating means 20, wherein a, preferably each, circulating means 20 comprises a first zone 40 in close proximity with a PV module to transfer heat between the PV cells 15 and said fluid, wherein said circulating means comprises a second zone 50 buried in the ground 60 thereby transferring heat between the fluid and the ground, and said means 20 being arranged to allow said fluid 25 to circulate from said first zone 40 to said second zone 50 and from the second zone 50 to the first zone 40.

Such temperature variation is limited by modulating, i.e. limiting or increasing the temperature of PV cells. In one embodiment, the system comprises means measuring and/or controlling the temperature of PV cells.

In one embodiment, said means measuring and/or controlling the temperature of PV cells modulate(s) the temperature by varying the flow of said heat transfer fluid in said circulating means, and/or the volume of said heat transfer fluid passing through the first and/or second zones.

The present invention also relates to a method or process for the thermal management of a system 1 converting solar radiation into electricity,
- said system 1, as defined in the present invention, comprising one or more photovoltaic (PV) modules, each module comprising one or more PV cells, said system comprising at least one means 30 for circulating a heat exchange fluid 25 comprising a PCM (phase change material) into one or more circulating means 20, wherein a, preferably each, circulating means 20 comprises a first zone 40 in close proximity with a PV module to transfer heat between the PV cells and said fluid, wherein said circulating means comprises a second zone 50 buried in the ground 60 thereby transferring heat between the fluid and the ground, and said means 20 being arranged to allow said fluid to circulate from said first zone 40 to said second zone 50 and from the second zone 50 to the first zone 40,
wherein said method or process comprises transferring heat between one or more PV cells 15 and the heat exchange fluid 25 in said first zone 40, and
wherein said method or process comprises transferring heat between the heat exchange fluid 25 and the ground 60 in said second zone 50.

In one embodiment, said system 1 is located in a tropical or sub-tropical region of Earth.

In one embodiment, said first zone 40 comprises an inlet 42 and an outlet 44 and said second zone 50 comprises an inlet 52 and an outlet 54, said outlet 44 of said first zone 40 being connected to said inlet 52 of said second zone 50 and said outlet 54 of said second zone 50 being connected to said inlet 42 of said first zone 40.

In one embodiment, said circulating means 20 form a loop tubular system for circulating said heat exchange fluid 25.

In one embodiment, said PV modules 10 are placed in the system 1, preferably at the top, to allow said heat exchange fluid 25 to circulate from said first zone 40 to said second zone 50 at least by gravity.

Preferably, circulating means are made of a material improving heat transfer at the first zone and at the second zone.

In one embodiment, circulating means are made of a material limiting heat transfer outside the first zone and/or at the second zone.

In one embodiment, circulating means are made of metal and/or plastic.

In one embodiment, circulating means comprises tubes with a push and click system to fix the tubes together.

In one embodiment, the design of said first zone 40 optimizes heat transfer from said PV cells 15 to said heat exchange fluid 25.

In one embodiment, the circulating means are closely coupled to the PV modules to promote the heat exchange.

In one embodiment, the circulating means is/are circulating pipe(s).

In one embodiment, the circulating means allows a film flow of the fluid in a specific
exchanger on the back side of the PV panels.

In one embodiment said PV module 10 is tilted, i.e. not horizontal nor vertical.

PV modules are generally tilted; thereby the gravity fosters the circulation of said heat exchange fluid 25 in the first zone 40, thereby limiting the overall electric power requirement.

In one embodiment, heat transfer of said heat exchange fluid 25 at the second zone 50 is performed only by heat transfer from said fluid 25 to the ground 60.

In one embodiment, said means 30 for circulating a heat exchange fluid 25 is a pump.

In one embodiment, said heat exchange fluid 25 is a slurry comprising said PCM. Typically, PCMs (phase change materials) store large quantities of heat by means of a phase change - for instance from solid to liquid. Once the phase change temperature has been reached by a PCM (phase1) in the case of "latent" heat storage, no temperature increase occurs for a period until the storage material has fully reached its new phase (phase 2).

Advantageously, according to the invention, once heated, the flow of modified encapsulated PCM particles is regenerated (Phase 2 → Phase 1) by circulating in a cooler zone.

Preferably, the PCM regeneration is all the more efficient as the temperature difference between the PV modules and the ground is important.

In one embodiment, the invention keeps the PV panel(s) cool, by extracting heat (or calories) from the PV panel(s). This embodiment is particularly interesting when PV panels are in hot regions of the Earth, and notably exposed to extreme heat (more than 50°C). In such an embodiment, the ground is at a temperature lower than atmosphere around the PV panel(s). In such an embodiment, said heat transfer fluid is heated in the first zone and cooled in the second zone.

Advantageously, the second zone is buried in the ground. Advantageously, the length, depth and (exchanger) design of the underground tubular part in the second zone is adapted to completely regenerate the PCM particles, which are then ready to operate again and recirculated towards the PV modules by one or more circulating means, such as for example pumps.

In one embodiment, the system comprises one or more tanks in the ground, said tank(s) comprising said heat exchange fluid. Typically, said heat exchange fluid is maintained in said tank(s) for a time sufficient to allow required heat exchange with the ground. Such tanks are arbitrarily called here "heat exchange tanks".

In one embodiment, the system comprises one or more buffer tanks to keep said heat exchange fluid underground and deliver said heat exchange fluid only when necessary, for example depending on daily and/or hourly requirements.

In one embodiment, the system comprises one or more control devices controlling the delivery of said heat exchange fluid from said heat exchange tank(s) and/or buffer tank(s).

In a specific embodiment, the invention concerns a PV/T cooling module, especially for solar farm in hot regions, made of a closed loop tubular system coupled with PV panels at the top and buried in the ground at the bottom where encapsulated PCM particles slurry flow through as a working fluid.

In one embodiment, the invention keeps the PV panel(s) warm, by transferring heat (or calories) from the ground via said heat exchange fluid to the PV panel(s). This embodiment is particularly interesting when PV panels are in cold regions of Earth, and notably exposed to extreme cold (below 0°C). In one embodiment, said system (1) is located in a cold region of Earth, typically from about 40° to 90° North or South latitude or having an ice climate (average temperature of the warmest month below 0°C) or tundra climate (average temperature of the warmest month between 0 und 10°C). Such embodiment could avoid or limit ice/snow deposit or even make ice/snow melt, notably to save or even avoid labor work. In such an embodiment, the ground is at a temperature higher than atmosphere around the PV panel(s). In such an embodiment, said heat transfer fluid is heated in the second zone and cooled in the first zone.

Advantageously, the length, depth and design of the circulating means in the second zone (typically underground tubular part) is adapted to completely generate "phase 2" of the PCM particles, which are then ready to operate again and recirculated towards the PV panels by one or more circulating means, such as for example pumps.

For example, said second zone is roughly at least at 1 meter deep in the ground, typically at 3 meters (about 10 feet) deep in the ground.

In one embodiment, said PCM is an encapsulated PCM, in particular micro-encapsulated PCM particles (MPCM).

In one embodiment, said heat exchange fluid 25 is a MPCM slurry comprising a mixture of the micro-encapsulated PCM particles, a solvent (potentially water) and one (or more) additive(s).

The PCM slurry makes it a better choice for the use in the PV/T system than the solid PCMs.

Some authors Qiu et al. [1-3] studied the use of MPCM slurry acting as a heat transfer fluids and/or thermal storage medium. Compared to a sensible heat storage phase material, e.g., water, a PCM could achieve 5-14 times heat storage capacity at the same volumetric condition:
[1] Z. Qiu, X. Zhao, P. Li, X. Zhang, S. Ali, J.Tan, Theoretical investigation of the energy performance of a novel MPCM (Microencapsulated Phase Change Material) slurry based PV/T module, Energy 87 (2015) 686-698;
[2] Z. Qiu, X. Ma, X. Zhao, P. Li, S.AIi, Experimental investigation of the energy performance of a novel Micro-encapsulated Phase Change Material (MPCM) slurry based PV/T system, Applied Energy 165 (2016) 260-271;
[3]Z. Qiu, X. Ma, P. Li, X. Zhao, A. Wright, Micro-encapsulated phase change material (MPCM) slurries: Characterization and building applications, Renew Sustain Energy Rev 77 (2017) 246-262.

This type of fluid, comprising a MPCM, has a number of distinguished features, namely, (1) having high thermal capacity during the phase change process; (2) acting as either the heat storage or heat transfer (transport) material; (3) conducting transfer of heat with relatively low temperature variation; (4) achieving a higher heat transfer rate during the phase change process; and (5) requiring a lower pump power that the same fluid without the encapsulated phase change material.

Several types of PCM core-shell particle slurries are now commercially available. The use of such PCM slurry based fluids to modulate, i.e. decrease or increase, the temperature of PV modules is preferred.

The present invention limits temperature variation in PV cells, and thereby limits losses of energy yield in PV cells.

The present invention modulates the temperature in PV cells, thereby limiting ageing of said PV panels.

Advantageously, the present invention provides an efficient way to limit losses of energy yield in PV cells with a simple architecture that could be easily coupled to existing facilities.

## Claims

1. A system (1) limiting temperature variation of one or more photovoltaic (PV) modules (10), each module comprising one or more PV cells (15), said system (1) comprising at least one means (30) for circulating a heat exchange fluid (25) comprising a PCM (phase change material) into one or more circulating means (20), wherein a, preferably each, circulating means (20) comprises a first zone (40) in close proximity with a PV module (10) to transfer heat between the PV cells (15) and said fluid (25), wherein said circulating means comprises a second zone (50) buried in the ground (60) thereby transferring heat between the fluid and the ground, and said means (20) being arranged to allow said fluid (25) to circulate from said first zone (40) to said second zone (50) and from the second zone (50) to the first zone (40).

2. The system according to claim 1, wherein said first zone (40) comprises an inlet (42) and an outlet (44) and said second zone (50) comprises an inlet (52) and an outlet (54), said outlet (44) of said first zone (40) being connected to said inlet (52) of said second zone (50) and said outlet (54) of said second zone (50) being connected to said inlet (42) of said first zone (40).

3. The system according to claim 1 or 2, wherein said circulating means (20) form a loop tubular system for circulating said heat exchange fluid (25).

4. The system according to any one of claims 1 to 3, wherein said PV modules (10) are placed in the system (1), preferably at the top, to allow said heat exchange fluid (25) to circulate from said first zone (40) to said second zone (50) at least by gravity.

5. The system according to any one of claims 1 to 4, wherein heat transfer of said heat exchange fluid (25) at the second zone (50) is performed only by heat transfer from said fluid (25) to the ground (60).

6. The system according to any one of claims 1 to 5, wherein said means (30) for circulating said heat exchange fluid (25) is a pump.

7. The system according to any one of claims 1 to 6, wherein said heat exchange fluid (25) is a slurry comprising said PCM.

8. The system according to any one of claims 1 to 7, wherein said PCM is an encapsulated PCM, in particular micro-encapsulated PCM particles (MPCM).

9. The system according to any one of claims 1 to 8, wherein said heat exchange fluid (25) is a MPCM slurry comprising a mixture of the micro-encapsulated PCM particles, a solvent and one or more additives.

10. The system according to any one of claims 1 to 9, wherein the design of said first zone (40) optimizes heat transfer from said PV cells (15) to said heat exchange fluid (25).

11. The system according to any one of claims 1 to 10, wherein said PV module (10) is tilted, i.e. not horizontal nor vertical.

12. The system according to any one of claims 1 to 11, wherein said system (1) is located in a tropical or sub-tropical region of Earth.

13. The system according to any one of claims 1 to 11, wherein said system (1) is located in a cold region of Earth, typically from about 40° to 90° North or South latitude or having an ice climate (average temperature of the warmest month below 0°C) or tundra climate (average temperature of the warmest month between 0 und 10°C).

14. A method or process for the thermal management of a system (1) converting solar radiation into electricity,
- said system (1), as defined in any one of claims 1 to 13, comprising one or more photovoltaic (PV) modules (10), each module comprising one or more PV cells (15), said system comprising at least one means (30) for circulating a heat exchange fluid (25) comprising a PCM (phase change material) into one or more circulating means (20), wherein a, preferably each, circulating means (20) comprises a first zone (40) in close proximity with a PV module (10) to transfer heat between the PV cells (15) and said fluid (25), wherein said circulating means comprises a second zone (50) buried in the ground (60) thereby transferring heat between the fluid and the ground, and said means (20) being arranged to allow said fluid to circulate from said first zone (40) to said second zone (50) and from the second zone (50) to the first zone (40),
wherein said method or process comprises transferring heat between one or more PV cells (15) and the heat exchange fluid (25) in said first zone (40), and
wherein said method or process comprises transferring heat between the heat exchange fluid (25) and the ground (60) in said second zone (50).

15. The method or process according to claim 14, wherein the gravity foster the circulation of said heat exchange fluid (25) in the first zone (40).
